(19) Europäisches Patentamt
European Patent Office
Office européen des brevets

(11) **EP 1 392 063 B1**

(12) **EUROPEAN PATENT SPECIFICATION**

(45) Date of publication and mention
of the grant of the patent:
**14.05.2008 Bulletin 2008/20**

(51) Int Cl.:
**H04N 9/68** (2006.01)

(21) Application number: **03255240.8**

(22) Date of filing: **22.08.2003**

(54) **Device and method for adjusting colour saturation**

Vorrichtung und Verfahren zum Einstellen der Farbsättigung

Dispositif et procédé de réglage de la saturation de couleur

(84) Designated Contracting States:
**DE FR GB NL**

(30) Priority: **23.08.2002 US 226601**

(43) Date of publication of application:
**25.02.2004 Bulletin 2004/09**

(60) Divisional application:
**07112026.5**

(73) Proprietor: **SAMSUNG ELECTRONICS CO., LTD.
Suwon-si,
Gyeonggi-do 442-742 (KR)**

(72) Inventor: **Kim, Yeong-taeg
Irvine
California 92618 (US)**

(74) Representative: **Walaski, Jan Filip et al
Venner, Shipley LLP
20 Little Britain
London EC1A 7DH (GB)**

(56) References cited:
**EP-A- 1 017 241       EP-A- 1 326 425
US-A- 4 812 902       US-A- 4 953 008
US-A- 4 953 011**

**Description**

The present invention relates to a colour saturation adjuster and a colour saturation adjustment method.

The luminance and chromatic component YUV colour system, also known as the luminance and colour difference colour system Y, R-Y, B-Y, is the colour system that is most widely used in video systems. For example, in a digital TV system, the Y, U, and V signals of a video are compressed and transmitted. In such a system, since the colour information is embedded in the chroma signals U and V, the colour saturation level is simply adjusted by multiplying the chroma signals U and V by a colour saturation adjusting gain a as expressed in the following equations:

$$U_t = \alpha \cdot U \qquad (1)$$

and

$$V_t = \alpha \cdot V . \qquad (2)$$

$U_t$ and $V_t$ are now colour adjusted chroma signals.

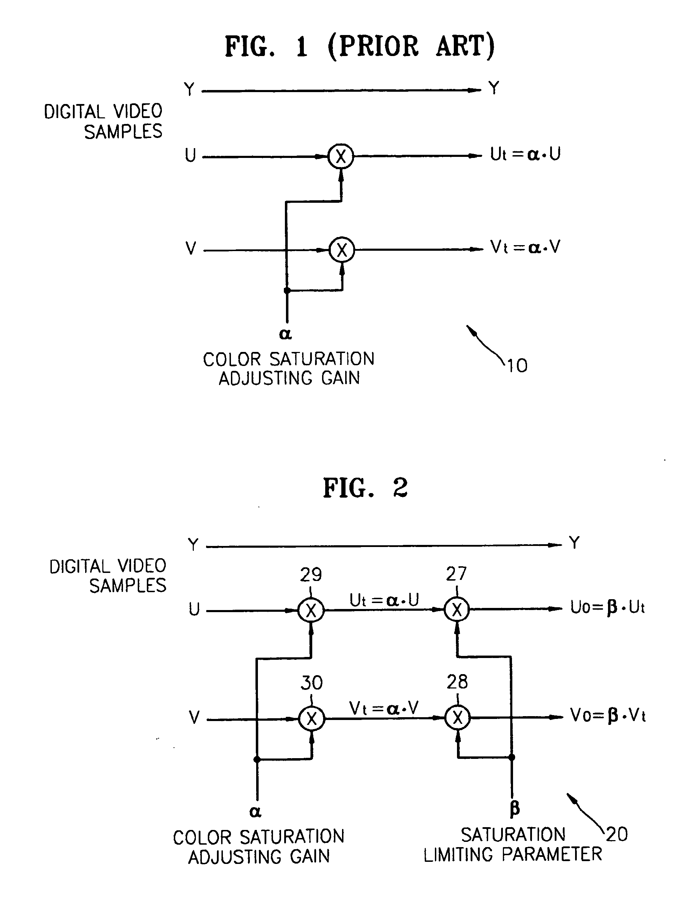

Figure 1 is a block diagram of a prior art colour saturation adjusting circuit 10 that can be used to multiply the sample values of the chroma signals U and V by the saturation adjusting gain $\alpha$. Note that if the saturation adjusting gain $\alpha = 0$, the resulting sample value will have no colour. If the saturation adjusting gain $\alpha > 1$, then the colour of the resulting sample value will be enriched.

One drawback of the colour saturation adjusting method that is performed by the colour saturation adjusting circuit 10 shown in Figure 1 is that a colour can be saturated. That is, depending on the degree of the colour saturation level of the input sample and the requested value of the colour saturation adjusting gain $\alpha$, the value of the output chroma samples $U_t$ and $V_t$ can be saturated, which generates some visual artifacts.

US-A-4812902 discloses a method for adjusting the color saturation during electronic image processing, wherein a pre-selected adjustment of color saturation is used, in which, in accordance with a non-linear characteristic curve, small chrominance signals C1, C2 are more amplified than larger chrominance signals C1, C2 corresponding to a higher degree of saturation.

EP-A-801509 discloses that a compression and/or gradation conversion of a color video signal are performed without causing any change in the hue of a picture represented by the color video signal.

A saturation conversion is executed by using the saturation gain and the luminance signal supplied from a controller. In the saturation conversion operation, the maximum level of at least one of the red, green and blue primary color signals is made coincident with a predetermined threshold level while the hue and luminance of the picture represented by the color video signal are maintained unchanged.

It is accordingly an aim of the invention to provide a method for adjusting the colour saturation level in a YUV colour system in which the method has a saturation limiting function.

A colour saturation adjuster according to the present invention is set out in claim 1, and a corresponding method is set out in claim 12.

A colour saturation adjuster according to the invention comprises means for calculating a saturation dependent saturation control parameter in dependence on U and V components of a YUV signal and multiplying means for multiplying U and V components of said YUV signal or a YUV signal derived therefrom, by said parameter.

A colour adjustment method according to the present invention comprises calculating a saturation dependent saturation control parameter in dependence on U and V components of a YUV signal and multiplying U and V components of said YUV signal, or a YUV signal derived therefrom, by said parameter.

Further preferred and optional features of the present invention are set forth in claims 2 to 11 and 13 to 23 appended hereto.

Embodiments of the present invention will now be described, by way of example, with reference to the accompanying drawings, in which:

Figure 1 is a block diagram of a prior art colour saturation adjusting circuit;
Figure 2 is a block diagram of a first embodiment of a colour saturation adjusting circuit according to the present invention;
Figure 3 is a more detailed block diagram of the first embodiment of the colour saturation adjusting circuit;
Figure 4 is a block diagram of a second embodiment of a colour saturation adjusting circuit;

Figure 5 is a block diagram of a third embodiment of a colour saturation adjusting circuit ;
Figures 6-8 show examples of functions that can be used for the real colour adjusting gain;
Figure 9 is a flowchart of a fourth embodiment of a method for adjusting and limiting colour saturation according to the present invention;
Figure 10 is a block diagram of the fourth embodiment of the colour saturation adjusting circuit;
Figure 11 is a flowchart of a fifth embodiment of a method for adjusting and limiting colour saturation according to the present invention; and
Figure 12 is a block diagram showing how the method can be used with an RGB colour system.

Let us denote Y, U, and V as the sample values of the input luminance and chroma signals. Let us also denote $Y, U_t$ and $V_t$ as the sample values of luminance and chroma signals that are output by a colour saturation adjusting circuit.

The fundamental object of the present invention is to multiply the sample values of the chroma signals $U_t$ and $V_t$ by a saturation limiting parameter $\beta$ for the purpose of limiting the saturation level to a certain level.

Referring to Figure 2, a colour saturation adjusting circuit 20 processes $U_t$ and $V_t$ to produce chroma signals $U_o$ and $V_o$ in accordance with the following equations:

$$U_o = \beta \cdot U_t \quad (3)$$

and

$$V_o = \beta \cdot V_t \quad (4).$$

Now the problem is how to formulate a suitable value for the saturation limiting parameter $\beta$. Note that the purpose of multiplying the sample values of the chroma signals $U_t$ and $V_t$ by the saturation limiting parameter $\beta$ as described in equations (3) and (4) is to prevent the saturation of $(U_t, V_t)$ when the saturation level of $(U_t, V_t)$ exceeds a certain level.

In the following, "input sample" Y, $U$ and $V$, means the sample value of the luminance signal, the sample value of the chroma signal U, and the sample value of the chroma signal V representing one pixel of an input colour image. To systematically derive the saturation limiting parameter $\beta$, it is necessary to define a saturation level of a given input colour sample Y, $U$ and $V$. $S_i$ is the saturation level of the input colour sample Y, $U$ and $V$.

One way of computing the saturation level $S_i$ of the input sample Y, $U$ and $V$ is by using the following equation:

$$S_i = \sqrt{U^2 + V^2} \quad (5).$$

Similarly, $S_t$ is the saturation level of the colour sample Y, $U_t$ and $V_t$ that is output by a typical colour adjusting circuit, for example the colour adjusting circuit 10 that is shown in Figure 1.

The saturation level $S_t$ of the output colour sample Y, $U_t$ and $V_t$ can then similarly be computed by using the following equation:

$$S_t = \sqrt{U_t^2 + V_t^2} \quad (6).$$

$\alpha$ is the colour saturation adjusting gain of the colour adjusting circuit 10. This colour adjusting circuit 10 has been incorporated into the colour adjusting circuit 20 shown in Figure 2 using multipliers 29, 30. The multipliers 29, 30 provide $U_t$ and $V_t$ by performing the multiplications expressed by equations (1) and (2), and thereby adjust the saturation of the input sample Y, U, and V by the colour saturation adjusting gain $\alpha$. $\beta = 1$ if the saturation level $S_t$ is less than a certain level indicating a "not saturated" condition, i.e.:-

$$\beta = 1 \text{ if } S_t \le L, \qquad (7)$$

where $L$ denotes a predetermined saturation level to which the colour saturation level of the output adjusted colour samples is limited. Consequently:

$$U_o = U_t \text{ and } V_o = V_t, \qquad (8)$$

when $S_t \le L$.

In the case when $S_t > L$, $U_t$ and $V_t$ are multiplied by $\beta$ so that the colour saturation level of $Y$, $U_t$ and $V_t$ can be adjusted as a function of $\beta$ in order to prevent possible saturation. $S_o$ as the colour saturation level of the colour sample $Y$, $U_o$ and $V_o$ that is output by the colour saturation adjusting circuit 20. The colour saturation level $S_o$ can be expressed by the following equation:

$$S_o = \beta \cdot S_t.$$

With $S_o = L$:

$$\beta = \frac{L}{S_t} \qquad (9).$$

Combining equation (9) with equations (3) and (4), we obtain:

$$U_o = \frac{L}{S_t} \cdot U_t \text{ and } V_o = \frac{L}{S_t} \cdot V_t \quad (10)$$

when $S_t > L$.

A first embodiment of a method for adjusting and limiting the colour saturation level of an input sample Y, U, and V uses the following equations:

$$U_o = \beta \cdot U_t \text{ and } V_o = \beta \cdot V_t \quad (11)$$

where

$$\beta = \begin{cases} 1 & if \quad S_t \le L \\ \dfrac{L}{S_t} & else \end{cases} \qquad (12)$$

and $U_t = \alpha \cdot U$ and $V_t = \alpha \cdot V$ (equations (1) and (2)) are obtained by multiplying the chroma components of the input sample by the saturation adjusting gain $\alpha$.

Figure 2 shows that multipliers 29, 30 are used to multiply the chroma components of the input sample by the saturation adjusting gain $\alpha$, and multipliers 27, 28 are used to multiply the results by the saturation limiting parameter $\beta$.

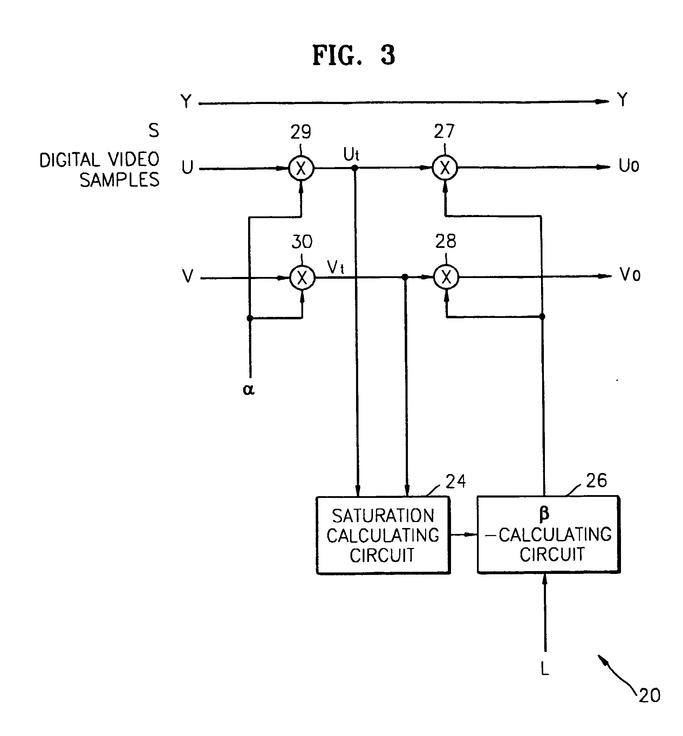

Referring to Figure 3, which is more detailed, a saturation calculating circuit 24 is provided for estimating or defining the saturation level S, of the input sample Y, *U* and *V*, after the chroma components of the input sample Y, *U* and *V* have been acted upon by the saturation adjusting gain α. The saturation calculating circuit 24 uses equation (6) to calculate the saturation level $S_t$. It should be understood that other equations could be used to define the saturation level $S_t$ and that the method is not restricted to using any specific equation for doing so. Some examples of other equations that can be used for defining the saturation level $S_t$ are as follows:

$$S_t = \alpha \cdot (U_t^2 + V_t^2),$$

$$S_t = \alpha \cdot (|U_t| + |V_t|),$$

$$S_t = \alpha \cdot \max(U_t^2, V_t^2),$$

$$S_t = \alpha \cdot \max(|U_t|, |V_t|),$$

and

$$S_t = \alpha \cdot \left( U_t^2 + V_t^2 + (U_t - V_t)^2 \right).$$

A β-calculating circuit 26 is provided for calculating the value of the saturation limiting parameter β in accordance with equation (12). Once the value of the saturation limiting parameter β is calculated, the chroma components $U_o$ and $V_o$ of the output sample can be obtained by the multipliers 27, 28, which operate in accordance with equations (11) and (12).

A second embodiment of the method for adjusting and limiting the colour saturation level of an input sample Y, U, and V uses the equations given in (1) and (2). In accordance with equations (1) and (2):

$$S_t = \sqrt{U_t^2 + V_t^2} = \alpha \cdot \sqrt{U^2 + V^2} = \alpha \cdot S_i. \qquad (13)$$

This relation along with the equations given in (11) and (12) is used in the second embodiment of the method for adjusting and limiting the colour saturation level of an input sample Y, U, and V can be described by the following equations:

$$U_o = \beta \cdot \alpha \cdot U \text{ and } V_o = \beta \cdot \alpha \cdot V \qquad (14)$$

where

$$\beta = \begin{cases} 1 & if \quad S_i \le \dfrac{L}{\alpha} \\ \dfrac{L}{\alpha \cdot S_i} & else \end{cases} \quad (15).$$

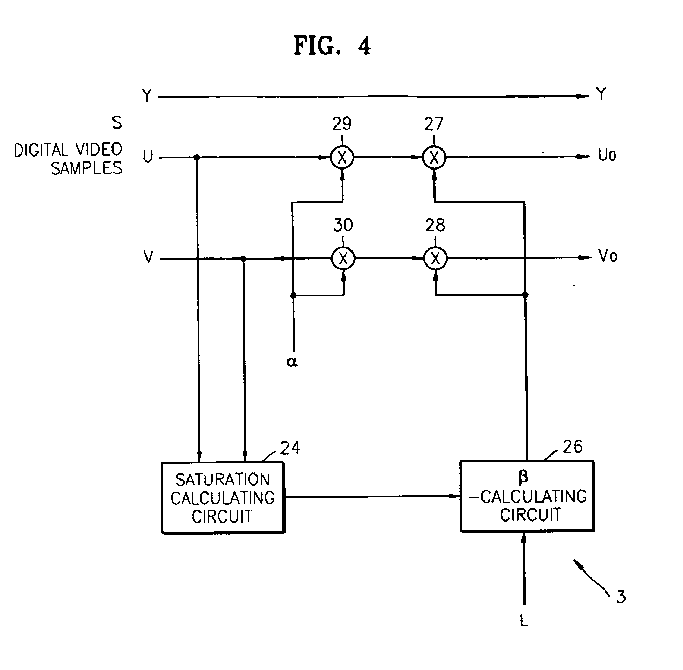

Referring to Figure 4, a circuit implementing the second embodiment has the same functional elements as described with reference to Figure 3 and, therefore, the same reference numerals have been used. The difference is that in the second embodiment, the saturation calculating circuit 24 calculates the saturation of the input sample Y, U, and V before the chroma components U and V of the input sample have been multiplied by the saturation adjusting gain $\alpha$. The saturation calculating circuit 24 defines the saturation using any suitable equation. For example, equation (5) or any one of the following equations are suitable:

$$S_i = \alpha \cdot (U^2 + V^2),$$

$$S_i = \alpha \cdot (|U| + |V|),$$

$$S_i = \alpha \cdot \max(U^2, V^2),$$

$$S_i = \alpha \cdot \max(|U|, |V|),$$

or

$$S_i = \alpha \cdot \left( U^2 + V^2 + (U - V)^2 \right)$$

In a third embodiment of the method for adjusting and limiting the colour saturation level of an input sample Y, U, and V can be developed by factoring the saturation adjusting gain $\alpha$ out of equations (14) and (15). The result of this can be expressed as:

$$U_o = r \cdot U \ \text{ and } \ V_o = r \cdot V \qquad (16)$$

where

$$r = \begin{cases} \alpha & if \quad S_i \le \dfrac{L}{\alpha} \\ \dfrac{L}{S_i} & else \end{cases} \quad (17).$$

The method described by (16) and (17) is equivalent to the method described by (11) and (12). However, it requires less computation. In this case, "r" acts not only as a saturation limiting parameter but also as a saturation adjusting gain parameter. r=αβ, where β is given by equation (15).

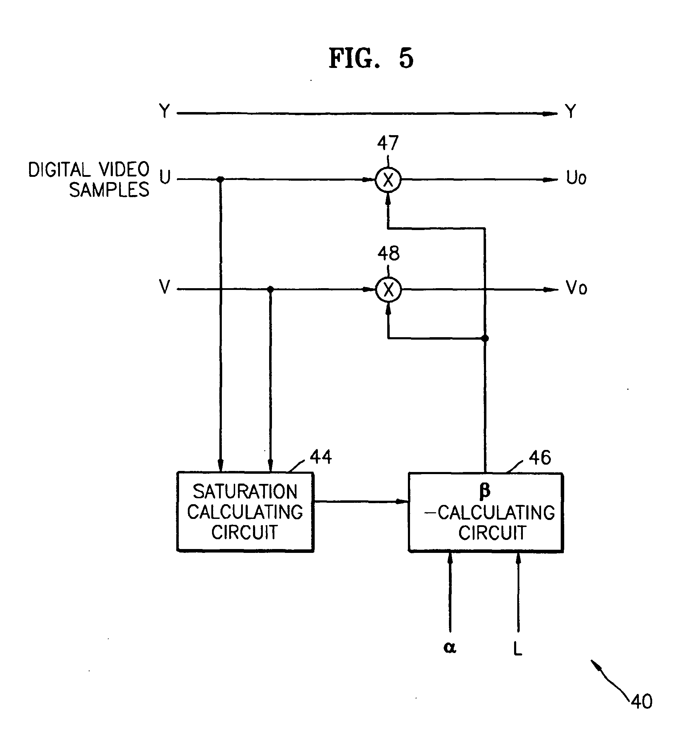

Referring to Figure 5, a circuit 44, implementing the third embodiment, calculates the saturation of the input sample Y, U, and V in a manner similar to that explained with regard to the second embodiment. The r-calculating circuit 46 calculates the value of r from the input saturation adjusting gain α and the predetermined limiting saturation level L. The third embodiment provides an advantage over the first two embodiments because only two multipliers 47, 48 are required.

A fourth embodiment according to the present invention, for adjusting and limiting the colour saturation level of an input sample Y, U, and V will now be described.

Given a as the colour saturation adjusting gain, $U_o$ and $V_o$, which are the chroma components of the output sample, are given by:

$$U_o = x \cdot U \text{ and } V_o = x \cdot V \quad (18a).$$

The real colour adjusting gain $x$ is:

$$x = \begin{cases} \alpha & if \quad 0 \le \alpha \le 1 \\ f(S_i) & if \quad \alpha > 1 \end{cases} \quad (18b),$$

in which:

$f(S_i)$ is a monotonically decreasing function over the range $0 \le S_i \le L$ where $L$ is a pre-determined constant;
$f(0)=\alpha$; and
$f(S_i)=1$ for $S_i \ge L$.

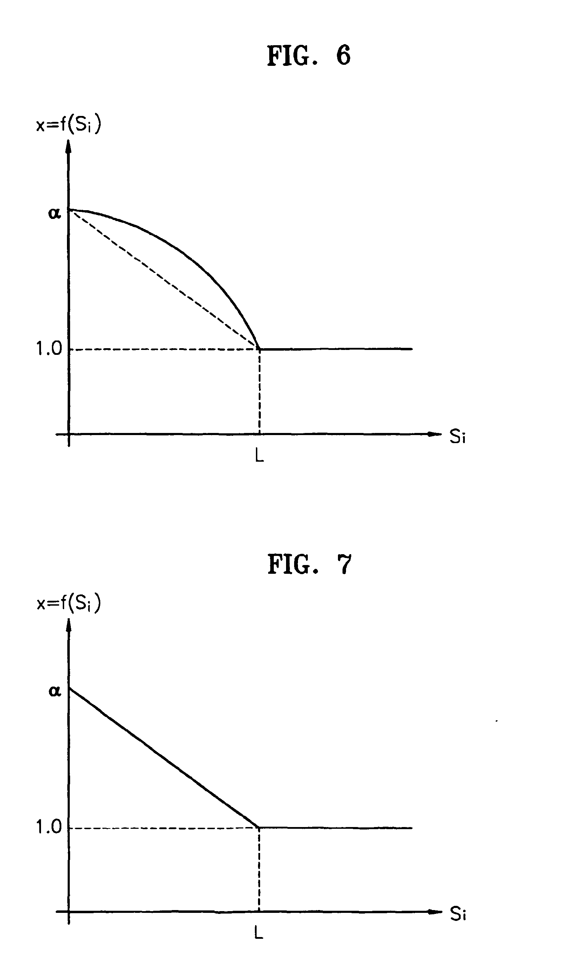

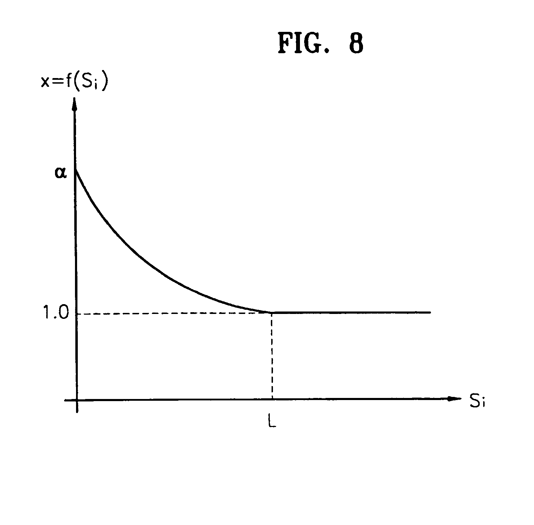

Examples of functions that can be used for x are shown in Figures 6, 7, and 8. For instance, $x = f(S_i)$ for $0 \le S_i \le L$ in Figure 6 can be expressed as:

$$x = 1 + (\alpha - 1) \cdot \frac{(L - S_i) \cdot (L + S_i)}{L^2}$$

In this case, the real colour adjusting gain becomes:

$$x = \begin{cases} \alpha & if \quad 0 \le \alpha \le 1 \\ 1 & if \quad \alpha > 1 \end{cases}$$

when $S_i > L$ by the constraints on $f(S_i)$.

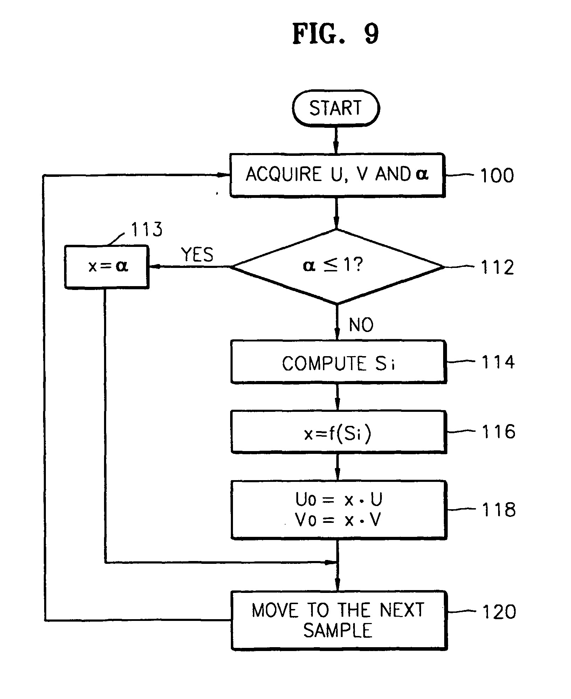

Referring to Figure 9, a fourth embodiment comprises a method. In step 100 of the method, the chroma components U and V of the input colour sample Y, U, and V are obtained, and the value of the saturation adjusting gain α is acquired, for example, from a circuit that sets this parameter. In step 112, it is determined whether the value of the saturation adjusting gain α is less than or equal to one. If so, then the real colour adjusting gain x is set to equal the value of the saturation adjusting gain α in step 113. If not, then the saturation level $S_i$ is calculated in step 114, which can be performed using any of the previously presented formulas. Other formulas could be used to calculate the saturation level $S_i$ and the method is not restricted to any specific formula. In step 116, the real colour adjusting gain x is calculated as a function of the calculated saturation level $S_i$ of the input sample using the equation $f(S_i)$. In step 118, the chroma components $U_0$ and $V_0$ of the corresponding output sample are calculated using the real colour adjusting gain x. In step 120, the next colour sample of the input image is obtained and then the whole process is repeated for each sample value of each image of the input video signal.

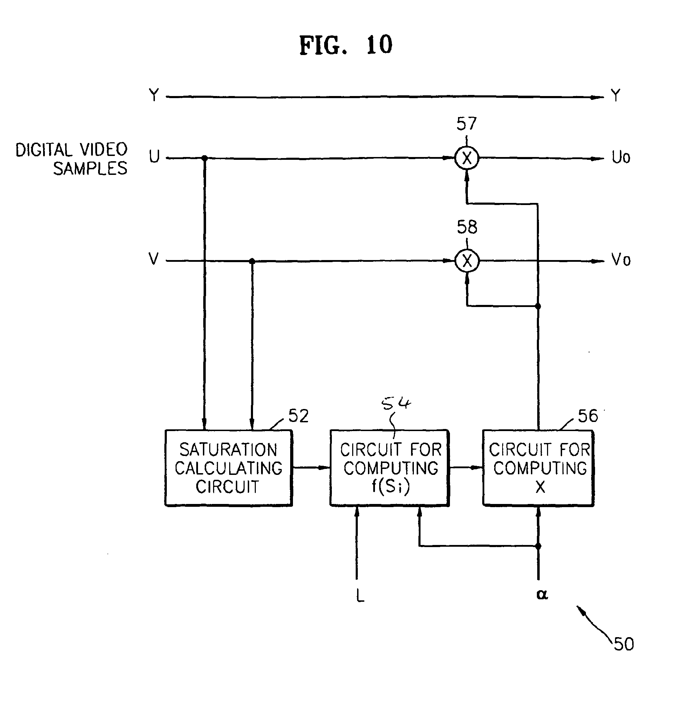

Referring to Figure 10, a circuit 50 implementing the fourth embodiment of the method comprises a saturation calculating circuit 52 which calculates the saturation level $S_i$ of the input sample as previously described, a circuit 54 for

computing $f(S_i)$ in dependence on the value of the saturation level $S_i$, a circuit 56 for computing x as a function of the calculated saturation level $S_i$ of the input sample, and multipliers 57, 58 for multiplying the chroma components U and V of the input sample by the real colour adjusting gain x to obtain the chroma components $U_0$ and $V_0$ of the output sample Y, $U_0$ and $V_0$. The colour saturation adjusting circuit 50 would then similarly act on the next colour sample of the input image.

In a fifth embodiment an additional constraint is imposed in equation (18b). The saturation level of the Y, $U_o$ and $V_o$ sample is limited using the relation:

$$S_o = x \cdot S_i \leq L.$$

When $S_i \leq L$ and $\alpha > 1$, that relation provides the following condition:

$$x \leq \frac{L}{S_i} \ (19).$$

By combining (18b) and (19), we obtain:

$$x = \begin{cases} \alpha & if \quad 0 \leq \alpha \leq 1 \\ \min(f(S_i), \dfrac{L}{S_i}) & if \quad a > 1 \quad and \quad S_i \leq L \ (20). \\ 1 & if \quad a > 1 \quad and \quad S_i > L \end{cases}$$

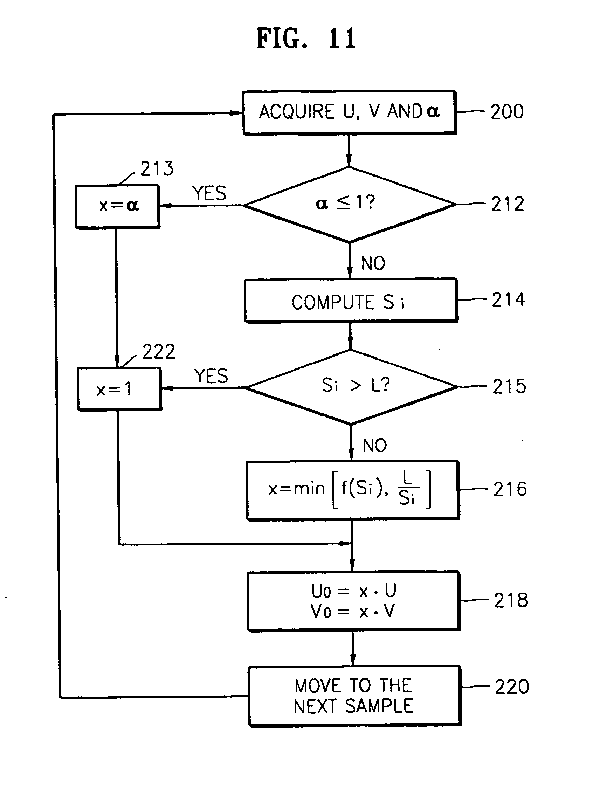

Referring to Figure 11, the fifth embodiment comprises a method, which is based on equations (18a) and (20), for adjusting and limiting the colour saturation level of an input colour sample Y, U, and V. In step 200, the chroma components U and V of the input colour sample Y, U, and V are obtained, and the value of the saturation adjusting gain $\alpha$ is acquired, for example, from a circuit that sets this parameter. In step 212, it is determined whether the value of the saturation adjusting gain $\alpha$ is less than or equal to one. If so, then the real colour adjusting gain x is set to equal the value of the saturation adjusting gain $\alpha$ in step 213. If not, then the saturation level $S_i$ is calculated in step 214, which can be performed using any of the previously presented formulas. Other formulas could be used to calculate the saturation level $S_i$ and the method is not restricted to any specific formula. In step 215, it is determined whether the saturation level $S_i$ is greater than the predetermined constant L. If so, then the value of the real colour adjusting gain x is set equal to one, and the method continues with step 218. If not, then in step 216, a first value is obtained by determining the value of equation $f(S_i)$ at the saturation level $S_i$ that has been calculated. A second value is obtained by dividing the value of the predetermined constant L by the saturation level $S_i$. Finally, in step 216, the value of the real colour adjusting gain x is set to the minimum value selected from the first value and the second value. In step 218, the chroma components $U_0$ and $V_0$ of the corresponding output sample are calculated using the real colour adjusting gain x. In step 220, the next colour sample of the input image is obtained and then the whole process is repeated for each sample value of each image of the input video signal.

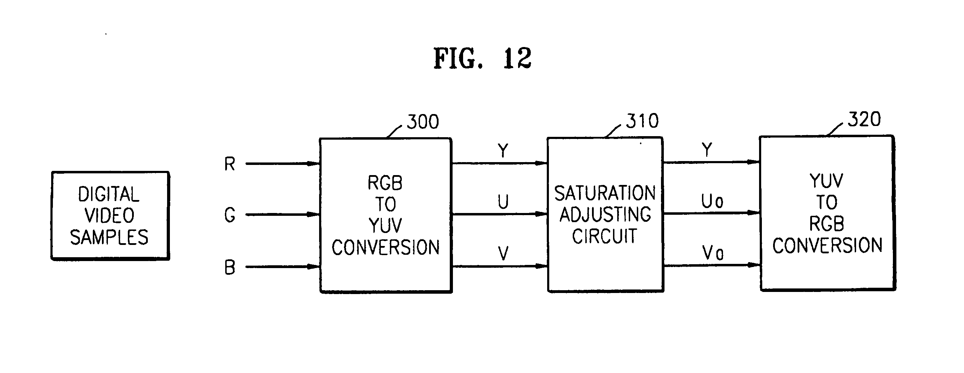

All of the embodiments of the method for adjusting and limiting the colour saturation level have been described using the chroma components U and V of a luminance and chromatic component Y, U, and V system. Figure 12 shows how the method can be used with a composite video system RGB. In step 300, the sample representing a RGB signal is converted to a sample representing a YUV signal. In step 310, one of the embodiments of the method for adjusting and limiting the colour saturation level of an input colour sample Y, U, and V is performed. Then in step 320, the YUV sample is converted back to an RGB sample for further processing or for display. Of course, the process is repeated for each sample value of each image of the input video signal.

## Claims

1.   A colour saturation adjuster comprising:

means (24; 44; 52) for calculating a saturation-related value (S) from U and V components of a YUV signal, using

$$S = \sqrt{U^2 + V^2}, \; S = U^2 + V^2, \; S = |U| + |V|,$$

$$S = \max(U^2, V^2), \; S = \max(|U|, |V|)$$

or

$$S = U^2 + V^2 + (U - V)^2$$

means (26; 46; 54, 56) for calculating a saturation-dependent saturation control parameter (β; x) in dependence on said saturation-related value (S) a saturation reference level (L) and another parameter (α) for multiplying the U and V components, wherein the means (54, 56) for setting the saturation control parameter (x) is configured such that:

if said another parameter (α) is not greater than one, the saturation control parameter (x) is set to be equal to said another parameter (α) else the saturation control parameter (x) is set to be equal to a function (f(S)) of a saturation-related value (S) which is a monotonically decreasing function over a range from zero to the saturation reference level L which equals said another parameter (α) when the saturation-related value (S) equals zero and equals 1 when the saturation-related value (S) is greater than the saturation reference level (L),

wherein

$$f(S) = 1 + (\alpha\text{-}1)(L\text{-}S)(L\text{+}S)/L^2.$$

multiplying means (27, 28; 47, 48; 57, 58) for multiplying U and V components of said YUV signal, or a YUV signal derived therefrom, by said parameter (β; x) and outputting respective U and V components of an output YUV signal,

wherein the parameter calculating means is arranged to calculate said parameter so as to limit colour saturation of the output YUV signal dependent upon said saturation reference level.

2. A colour saturation adjuster according to claim 1, including input multiplying means (29, 30) for multiplying U and V components of an input YUV signal by another parameter (α).

3. A colour saturation adjuster according to claim 2, wherein the means (24, 26) for calculating a saturation control parameter (β) calculates said parameter in dependence on the Y and U values output by the input multipliers (29, 30).

4. A colour saturation adjuster according to claim 1, 2 or 3, including means for setting a saturation reference level (L), wherein the means (26) for setting the saturation control parameter (β) is configured such that if the saturation-related value (S) is greater than the saturation reference level (L), the saturation control parameter (β) is set to be equal to the saturation reference level (L) divided by the saturation-related value (S).

5. A colour saturation adjuster according to claim 4, wherein the means (26) for setting the saturation control parameter (β) is configured such that if the saturation-related value (S) is not greater than the saturation reference level (L), the saturation control parameter (β) is set equal to one.

6. A colour saturation adjuster according to claim 2 or 3, including means for setting a saturation reference level (L), wherein the means (26) for setting the saturation control parameter (β) is configured such that if the saturation-related value (S) is greater than the saturation reference level (L) divided by said another parameter (α), setting the saturation control parameter (β) equal to L/(α)•(S).

7. A colour saturation adjuster according to claim 6, wherein the means (26) for setting the saturation control parameter ($\beta$) is configured such that if the saturation-related value (S) is not greater than the saturation reference level (L), the saturation control parameter ($\beta$) is set to be equal to one.

8. A colour saturation adjuster according to claim 2 or 3, including means for setting a saturation reference level (L), wherein the means (26) for setting the saturation control parameter ($\beta$) is configured such that if the saturation-related value (S) is greater than the saturation reference level (L) divided by said another parameter ($\alpha$), the saturation control parameter ($\beta$) is set to equal to L/S else the saturation control parameter ($\beta$) is set equal to said another parameter ($\alpha$).

9. A colour saturation adjuster according to claim 1, including means for obtaining a luminance value (Y) and providing the luminance value (Y).

10. A colour saturation adjuster according to claim 1, wherein the means (54, 56) for setting the saturation control parameter (x) is configured such that:

   if said another parameter ($\alpha$) is not greater than one, the saturation control parameter (x) is set to be equal to said another parameter ($\alpha$) else, if a saturation-related value (S) is greater than the saturation reference level L, the saturation control parameter (x) is set to be equal to one else if the saturation-related value (S) is not greater than the saturation reference level L, the saturation control parameter (x) is set to be equal to a minimum value selected from the group consisting of a function (f(S)) of said saturation control parameter (S) and a value obtained by dividing the saturation reference level L by the saturation-related value (S),

   wherein said function (f(S)) is a monotonically decreasing function over a range from zero to the saturation reference level L, equals said another parameter ($\alpha$) when the saturation-related value S equals zero, and equals 1 when the saturation-related value (S) is greater than the saturation reference level (L).

11. A colour saturation adjuster according to claim 1, wherein the means (54, 56) setting the saturation control parameter (x) is configured such that:

   if said another parameter ($\alpha$) is not greater than one, the saturation control parameter (x) is set to be equal to said another parameter $\alpha$ else, if a saturation-related value (S) is greater than the saturation reference level (L), the saturations control parameter (x) is set to be equal to one.

12. A colour saturation adjustment method comprising:

   calculating a saturation-related value (S) from U and V components of a YUV signal, using

$$S = \sqrt{U^2 + V^2}, \quad S = U^2 + V^2, \quad S = |U| + |V|,$$

$$S = \max(U^2, V^2), \quad S = \max(|U|, |V|)$$

   or

$$S = U^2 + V^2 + (U - V)^2$$

   calculating a saturation-dependent saturation control parameter ($\beta$; x) in dependence on said saturation-related value (S) and a saturation reference level (L), and outputting respective U and V components of an output YUV signal and another parameter ($\alpha$) for multiplying the U and V components,
   setting the saturation control parameter (x) such that:

   if said another parameter ($\alpha$) is not greater than one, the saturation control parameter (x) is set to be equal to said another parameter ($\alpha$) else the saturation control parameter (x) is set to be equal to a function (f(S)) of a saturation-related value (S) which is a monotonically decreasing function over a range from zero to the saturation reference level L which equals said another parameter ($\alpha$) when the saturation-related value (S) equals zero and equals 1 when the saturation-related value (S) is greater than the saturation reference level (L),

wherein

$$f(S) = 1 + (\alpha-1)(L-S)(L+S)/L^2.$$

multiplying U and V components of said YUV signal, or a YUV signal derived therefrom, by said parameter ($\beta$; x)

wherein the parameter is calculated so as to limit colour saturation of the output YUV signal dependent upon said saturation reference level.

13. A method according to claim 12, including multiplying U and V components of an input YUV signal by another parameter ($\alpha$). another parameter ($\alpha$) for multiplying the U and V components

14. A method according to claim 13, wherein the calculation of the saturation control parameter ($\beta$) calculates said parameter in dependence on the Y and U values following multiplication by said another parameter.

15. A method according to claim 12, 13 or 16, including setting a saturation reference level (L) and, if the saturation-related value (S) is greater than the saturation reference level (L), setting the saturation control parameter (P) equal to the saturation reference level L divided by the saturation-related value (S).

16. A method according to claim 15, wherein, if the saturation-related value (S) is not greater than the saturation reference level (L), the saturation control parameter ($\beta$) is set equal to one.

17. A method according to claim 13 or 14, comprising setting a saturation reference level (L) and, if the saturation-related value (S) is greater than the saturation reference level (L) divided by said another parameter ($\alpha$), setting the saturation control parameter ($\beta$) equal to L/($\alpha$)•(S).

18. A method according to claim 17, wherein if the saturation-related value (S) is not greater than the saturation reference level (L), the saturation control parameter ($\beta$) is set to be equal to one.

19. A method according to claim 13 or 14, comprising setting a saturation reference level (L) and, if the saturation-related value (S) is greater than the saturation reference level (L) divided by said another parameter ($\alpha$), setting the saturation control parameter ($\beta$) equal to L/S else setting the saturation control parameter ($\beta$) equal to said another parameter ($\alpha$).

20. A method according to claim 12, including:

obtaining a luminance value (Y) ; and
providing the luminance value (Y).

21. A method according to claim 12, comprising:

setting the saturation control parameter (x) such that:

if said another parameter ($\alpha$) is not greater than one, the saturation control parameter (x) is set to be equal to said another parameter ($\alpha$) else, if a saturation-related value (S) is greater than the saturation reference level L, the saturation control parameter (x) is set to be equal to one else if the saturation-related value (S) is not greater than the saturation reference level L, the saturation control parameter (x) is set to be equal to a minimum value selected from the group consisting of a function (f(S)) of said saturation control parameter (S) and a value obtained by dividing the saturation reference level L by the saturation-related value (S),

wherein said function (f(S)) is a monotonically decreasing function over a range from zero to the saturation reference level L, equals said another parameter ($\alpha$) when the saturation-related value S equals zero, and equals 1 when the saturation-related value (S) is greater than the saturation reference level (L).

22. A method according to claim 12, comprising:

> setting a saturation reference level (L);
> setting the saturation control parameter (x) such that:

>> if said another parameter ($\alpha$) is not greater than one, the saturation control parameter (x) is set to be equal to said another parameter $\alpha$ else, if a saturation-related value (S) is greater than the saturation reference level (L), the saturations control parameter (x) is set to be equal to one.

**Patentansprüche**

1. Farbsättigungs-Einstelivorrichtung, umfassend:

> Einrichtungen (24; 44; 52) zum Berechnen eines mit der Sättigung verbundenen Wertes (S) anhand von U- und V-Komponenten eines YUV-Signals unter Verwendung von:

$$S = \sqrt{U^2 + V^2} \;, \; S = U^2 + V^2, \; S = |U| + |V|,$$

$$S = \max(U^2, V^2), \; S = \max(|U|, |V|)$$

> oder

$$S = U^2 + V^2 + (U - V)^2;$$

> Einrichtungen (26; 46; 54; 56) zum Berechnen eines sättigungsabhängigen Sättigungssteuerparameters ($\beta$; x) in Abhängigkeit von dem mit der Sättigung verbundenen Wert (S), eines Sättigungsbezugspegels (L) und eines anderen Parameters ($\alpha$) zum Multiplizieren der U- und V-Komponenten, wobei die Einrichtung (54, 56) zum Einstellen des Sättigungssteuerparameters (x) so konfiguriert ist, dass,
> wenn der andere Parameter ($\alpha$) nicht größer als 1 ist, der Sättigungssteuerparameter (x) so eingestellt wird, dass er dem anderen Parameter ($\alpha$) entspricht, wobei andernfalls der Sättigungssteuerparameter (x) so eingestellt wird, dass er einer Funktion (f(S)) eines mit der Sättigung verbundenen Wertes (S) entspricht, die eine monoton abnehmende Funktion über einen Bereich von Null zu dem Sättigungsbezugspegel L ist, die dem anderen Parameter ($\alpha$) entspricht, wenn der mit der Sättigung verbundene Wert (S) Null entspricht, und 1 entspricht, wenn der mit der Sättigung verbundene Wert (S) größer ist als der Sättigungsbezugspegel (L), wobei f(S) = 1 + ($\alpha$-1) (L-S) (L+S)/L$^2$;
> Multipliziereinrichtungen (27, 28; 47, 48; 57, 58) zum Multiplizieren von U- und V-Komponenten des YUV-Signals oder eines davon abgeleiteten YUV-Signals mit dem Parameter ($\beta$; x) und zum Ausgeben jeweiliger U- und V-Komponenten eines Ausgangs-YUV-Signals;

> wobei die Parameterberechnungseinrichtung eingerichtet ist, den Parameter so zu berechnen, dass Farbsättigung des Ausgangs-YUV-Signals in Abhängigkeit von dem Sättigungsbezugspegel begrenzt wird.

2. Farbsättigungs-Einstellvorrichtung nach Anspruch 1, die Eingangsmultipliziereinrichtungen (29, 30) enthält, um U- und V-Komponenten eines Eingangs-YUV-Signals mit einem anderen Parameter ($\alpha$) zu multiplizieren.

3. Farbsättigungs-Einstellvorrichtung nach Anspruch 2, wobei die Einrichtung (24, 26) zum Berechnen eines Sättigungssteuerparameters ($\beta$) den Parameter in Abhängigkeit von den Y- und U-Werten berechnet, die von den Eingangsmultipliziereinrichtungen (29, 30) ausgegeben werden.

4. Farbsättigungs-Einstellvorrichtung nach Anspruch 1, 2 oder 3, die Einrichtungen zum Einstellen eines Sättigungsbezugspegets (L) enthält, wobei die Einrichtung (26) zum Einstellen des Sättigungssteuerparameters ($\beta$) so konfiguriert ist, dass, wenn der mit der Sättigung verbundene Wert (S) größer ist als der Sättigungsbezugspegel (L), der Sättigungssteuerparameter ($\beta$) so eingestellt wird, dass er dem Sättigungsbezugspegel (L) geteilt durch den mit der Sättigung verbundenen Wert (S) entspricht.

5. Farbsättigungs-Einstellvorrichtung nach Anspruch 4, wobei die Einrichtung (26) zum Einstellen des Sättigungssteuerparameters ($\beta$) so konfiguriert ist, dass, wenn der mit der Sättigung verbundene Wert (S) nicht größer ist als der Sättigungsbezugspegel (L), der Sättigungssteuerparameter ($\beta$) so eingestellt wird, dass er 1 entspricht.

6. Farbsättigungs-Einstellvorrichtung nach Anspruch 2 oder 3, die Einrichtungen zum Einstellen eines Sättigungsbezugspegels (L) enthält, wobei die Einrichtung (26) zum Einstellen des Sättigungssteuerparameters ($\beta$) so konfiguriert ist, dass, wenn der mit der Sättigung verbundene Wert (S) größer ist als der Sättigungsbezugspegel (L) geteilt durch den anderen Parameter ($\alpha$), der Sättigungssteuerparameter ($\beta$) so eingestellt wird, dass er $L/(\alpha)\bullet(S)$ entspricht.

7. Farbsättigungs-Einstellvorrichtung nach Anspruch 6, wobei die Einrichtung (26) zum Einstellen des Sättigungssteuerparameters ($\beta$) so konfiguriert ist, dass, wenn der mit der Sättigung verbundene Wert (S) nicht größer ist als der Sättigungsbezugspegel (L), der Sättigungssteuerparameter ($\beta$) so eingestellt wird, dass er 1 entspricht.

8. Farbsättigungs-Einstellvorrichtung nach Anspruch 2 oder 3, die Einrichtungen zum Einstellen eines Sättigungsbezugspegels (L) enthält, wobei die Einrichtung (26) zum Einstellen des Sättigungssteuerparameters ($\beta$) so konfiguriert ist, dass, wenn der mit der Sättigung verbundene Wert (S) größer ist als der Sättigungsbezugspegel (L) geteilt durch den anderen Parameter ($\alpha$), der Sättigungssteuerparameter ($\beta$) so eingestellt wird, dass er L/S entspricht, wobei andernfalls der Sättigungssteuerparameter ($\beta$) so eingestellt wird, dass er dem anderen Parameter ($\alpha$) entspricht.

9. Farbsättigungs-Einstellvorrichtung nach Anspruch 1, die Einrichtungen zum Beziehen eines Luminanzwertes (Y) enthält und den Luminanzwert (Y) bereitstellt.

10. Farbsättigungs-Einstellvorrichtung nach Anspruch 1, wobei die Einrichtung (54, 56) zum Einstellen des Sättigungssteuerparameters (x) so konfiguriert ist, dass,
wenn der andere Parameter ($\alpha$) nicht größer als 1 ist, der Sättigungssteuerparameter (x) so eingestellt wird, dass er dem anderen Parameter ($\alpha$) entspricht, wobei andernfalls, wenn ein mit der Sättigung verbundener Wert (S) größer ist als der Sättigungsbezugspegel L, der Sättigungssteuerparameter (x) so eingestellt wird, dass er 1 entspricht, und andernfalls, wenn der mit der Sättigung verbundene Wert (S) nicht größer ist als der Sättigungsbezugspegel L, der Sättigungssteuerparameter (x) so eingestellt wird, dass er einem Minimumwert entspricht, der ausgewählt wird aus der Gruppe bestehend aus einer Funktion (f(S)) des Sättigungssteuerparameters (S) und einem Wert, der durch Teilen des Sättigungsbezugspegels L durch den mit der Sättigung verbundenen Wert (S) ermittelt wird,
wobei die Funktion (f(S)) eine monoton abnehmende Funktion über einen Bereich von Null zu dem Sättigungsbezugspegel L ist, dem anderen Parameter ($\alpha$) entspricht, wenn der mit der Sättigung verbundene Wert S Null entspricht, und 1 entspricht, wenn der mit der Sättigung verbundene Wert (S) größer ist als der Sättigungsbezugspegel (L).

11. Farbsättigungs-Einstellvorrichtung nach Anspruch 1, wobei die Einrichtung (54, 56) zum Einstellen des Sättigungssteuerparameters (x) so konfiguriert ist, dass,
wenn der andere Parameter ($\alpha$) nicht größer als 1 ist, der Sättigungssteuerparameter (x) so eingestellt wird, dass er dem anderen Parameter $\alpha$ entspricht, wobei andernfalls, wenn ein mit der Sättigung verbundener Wert (S) größer ist als der Sättigungsbezugspegel (L), der Sättigungssteuerparameter (x) so eingestellt wird, dass er 1 entspricht.

12. Farbsättigungs-Einstellverfahren, umfassend:

Berechnen eines mit der Sättigung verbundenen Wertes (S) anhand von U- und V-Komponenten eines YUV-Signals unter Verwendung von:

$$S = \sqrt{U^2 + V^2} \, , \ S = U^2 + V^2 \, , \ S = |U| + |V| \, ,$$

$$S = \max(U^2, V^2) \, , \ S = \max\big(|U|, |V|\big)$$

oder

$$S = U^2 + V^2 + (U - V)^2 \, ;$$

Berechnen eines sättigungsabhängigen Sättigungssteuerparameters ($\beta$; x) in Abhängigkeit von dem mit der Sättigung verbundenen Wert (S) und eines Sättigungsbezugspegels (L) und Ausgeben jeweiliger U- und V-Komponenten eines Ausgangs-YUV-Signals und eines anderen Parameters ($\alpha$) zum Multiplizieren der U- und V-Komponenten;

Einstellen des Sättigungssteuerparameters (x), so dass,

wenn der andere Parameter ($\alpha$) nicht größer als 1 ist, der Sättigungssteuerparameter (x) so eingestellt wird, dass er dem anderen Parameter ($\alpha$) entspricht, wobei andernfalls der Sättigungssteuerparameter (x) so eingestellt wird, dass er einer Funktion (f(S)) eines mit der Sättigung verbundenen Wertes (S) entspricht, die eine monoton abnehmende Funktion über einen Bereich von Null zu dem Sättigungsbezugspegel L ist, die dem anderen Parameter ($\alpha$) entspricht, wenn der mit der Sättigung verbundene Wert (S) Null entspricht, und 1 entspricht, wenn der mit der Sättigung verbundene Wert (S) größer ist als der Sättigungsbezugspegel (L), wobei f(S) = 1 + ($\alpha$-1) (L-S) (L+S)/L$^2$;

Multiplizieren von U- und V-Komponenten des YUV-Signals oder eines davon abgeleiteten YUV-Signals mit dem Parameter ($\beta$; x);

wobei der Parameter so berechnet wird, dass Farbsättigung des Ausgangs-YUV-Signals in Abhängigkeit von dem Sättigungsbezugspegel begrenzt wird.

13. Verfahren nach Anspruch 12, das Multiplizieren von U- und V-Komponenten eines Eingangs-YUV-Signals mit einem anderen Parameter ($\alpha$) enthält.

14. Verfahren nach Anspruch 13, wobei die Berechnung des Sättigungssteuerparameters ($\beta$) den Parameter in Abhängigkeit von den Y- und U-Werten im Anschluss an das Multiplizieren mit dem anderen Parameter berechnet.

15. Verfahren nach Anspruch 12, 13 oder 16, enthaltend Einstellen eines Sättigungsbezugspegels (L) und, wenn der mit der Sättigung verbundene Wert (S) größer ist als der Sättigungsbezugspegel (L), Einstellen des Sättigungssteuerparameters ($\beta$), so dass er dem Sättigungsbezugspegel L geteilt durch den mit der Sättigung verbundenen Wert (S) entspricht.

16. Verfahren nach Anspruch 15, wobei, wenn der mit der Sättigung verbundene Wert (S) nicht größer ist als der Sättigungsbezugspegel (L), der Sättigungssteuerparameter ($\beta$) so eingestellt wird, dass er 1 entspricht.

17. Verfahren nach Anspruch 13 oder 14, umfassend Einstellen eines Sättigungsbezugspegels (L) und, wenn der mit der Sättigung verbundene Wert (S) größer ist als der Sättigungsbezugspegel (L) geteilt durch den anderen Parameter ($\alpha$), Einstellen des Sättigungssteuerparameters ($\beta$), so dass er L/($\alpha$)•(S) entspricht.

18. Verfahren nach Anspruch 17, wobei, wenn der mit der Sättigung verbundene Wert (S) nicht größer ist als der Sättigungsbezugspegel (L), der Sättigungssteuerparameter ($\beta$) so eingestellt wird, dass er 1 entspricht.

19. Verfahren nach Anspruch 13 oder 14, umfassend Einstellen eines Sättigungsbezugspegels (L) und, wenn der mit der Sättigung verbundene Wert (S) größer ist als der Sättigungsbezugspegel (L) geteilt durch den anderen Parameter ($\alpha$), Einstellen des Sättigungssteuerparameters ($\beta$), so dass er L/S entspricht, andernfalls Einstellen des Sättigungssteuerparameters (β), so dass er dem anderen Parameter (α) entspricht.

**20.** Verfahren nach Anspruch 12, enthaltend:

Ermitteln eines Luminanzwertes (Y); und
Bereitstellen des Luminanzwertes (Y).

**21.** Verfahren nach Anspruch 12, umfassend:

Einstellen des Sättigungssteuerparameters (x), so dass,
wenn der andere Parameter (α) nicht größer als 1 ist, der Sättigungssteuerparameter (x) so eingestellt wird, dass er dem anderen Parameter (α) entspricht, wobei andernfalls, wenn ein mit der Sättigung verbundener Wert (S) größer ist als der Sättigungsbezugspegel L, der Sättigungssteuerparameter (x) so eingestellt wird, dass er 1 entspricht, und andernfalls, wenn der mit der Sättigung verbundene Wert (S) nicht größer ist als der Sättigungsbezugspegel L, der Sättigungssteuerparameter (x) so eingestellt wird, dass er einem Minimumwert entspricht, der ausgewählt wird aus der Gruppe bestehend aus einer Funktion (f(S)) des Sättigungssteuerparameters (S) und einem Wert, der durch Teilen des Sättigungsbezugspegels L durch den mit der Sättigung verbundenen Wert (S) ermittelt wird,

wobei die Funktion (f(S)) eine monoton abnehmende Funktion über einen Bereich von Null zu dem Sättigungsbezugspegel L ist, dem anderen Parameter (α) entspricht, wenn der mit der Sättigung verbundene Wert S Null entspricht, und 1 entspricht, wenn der mit der Sättigung verbundene Wert (S) größer ist als der Sättigungsbezugspegel (L).

**22.** Verfahren nach Anspruch 12, umfassend:

Einstellen eines Sättigungsbezugspegels (L);
Einstellen des Sättigungssteuerparameters (x), so dass,
wenn der andere Parameter (α) nicht größer als 1 ist, der Sättigungssteuerparameter (x) so eingestellt wird, dass er dem anderen Parameter α entspricht, wobei andernfalls, wenn ein mit der Sättigung verbundener Wert (S) größer ist als der Sättigungsbezugspegel (L), der Sättigungssteuerparameter (x) so eingestellt wird, dass er 1 entspricht.

**Revendications**

**1.** Dispositif de réglage de saturation de couleur comportant :

des moyens (24 ; 44 ; 52) pour calculer une valeur associée à la saturation (S) à partir des composantes U et V d'un signal YUV, en utilisant

$$S = \sqrt{U^2 + V^2}, \quad S = U^2 + V^2, \quad S = |U| + |V|,$$

$$S = \max(U^2, V^2), \quad S = \max(|U|, |V|)$$

ou

$$S = U^2 + V^2 + (U - V)^2$$

des moyens (26 ; 46 ; 54, 56) pour calculer un paramètre de commande de saturation dépendant de la saturation (β ; x) en fonction de ladite valeur associée à la saturation (S), un niveau de référence de saturation (L) et un autre paramètre (α) pour multiplier les composantes U et V,
dans lequel des moyens (54, 56) pour établir le paramètre de commande de saturation (x) sont configurés de sorte que :

si ledit autre paramètre (α) n'est pas supérieur à un, le paramètre de commande de saturation (x) est établi pour être égal audit autre paramètre (α) sinon, le paramètre de commande de saturation (x) est établi pour être égal à une fonction (f(S)) d'une valeur associée à la saturation (S) qui est une fonction diminuant de manière monotone sur une plage allant de zéro jusqu'au niveau de référence de saturation qui est égal audit autre paramètre (α) lorsque la valeur associée à la saturation (S) est égale à zéro, et égale à 1 lorsque la valeur associée à la saturation (S) est supérieure au niveau de référence de saturation (L), où

$$f(S) = 1 + (\alpha - 1)(L - S)(L + S)/L^2$$

des moyens de multiplication (27, 28 ; 47, 48 ; 57, 58) pour multiplier les composantes U et V dudit signal YUV, ou un signal YUV dérivé de celui-ci, par ledit paramètre (β ; x) et délivrer en sortie des composantes U et V respectives d'un signal YUV de sortie,

dans lequel les moyens de calcul de paramètre sont conçus pour calculer ledit paramètre de manière à limiter la saturation de couleur du signal YUV de sortie en fonction dudit niveau de référence de saturation.

2.  Dispositif de réglage de saturation de couleur selon la revendication 1, incluant des moyens de multiplication d'entrée (29, 30) pour multiplier des composantes U et V d'un signal YUV d'entrée par un autre paramètre (α).

3.  Dispositif de réglage de saturation de couleur selon la revendication 2, dans lequel les moyens (24, 26) pour calculer un paramètre de commande de saturation (β) calculent ledit paramètre en fonction des valeurs Y et U délivrées en sortie par les multiplicateurs d'entrée (29, 30).

4.  Dispositif de réglage de saturation de couleur selon la revendication 1, 2 ou 3, incluant des moyens pour établir un niveau de référence de saturation (L), dans lequel les moyens (26) pour établir le paramètre de commande de saturation (β) sont configurés de sorte que si la valeur associée à la saturation (S) est supérieure au niveau de référence de saturation (L), le paramètre de commande de saturation (β) est établi pour être égal au niveau de référence de saturation (L) divisé par la valeur associée à la saturation (S).

5.  Dispositif de réglage de saturation de couleur selon la revendication 4, dans lequel les moyens (26) pour établir le paramètre de commande de saturation (β) sont configurés de sorte que si la valeur associée à la saturation (S) n'est pas supérieure au niveau de référence de saturation (L), le paramètre de commande de saturation (β) est établi pour être égal à un.

6.  Dispositif de réglage de saturation de couleur selon la revendication 2 ou 3, incluant des moyens pour établir un niveau de référence de saturation (L), dans lequel les moyens (26) pour établir le paramètre de commande de saturation (β) sont configurés de sorte que si la valeur associée à la saturation (S) est supérieure au niveau de référence de saturation (L) divisé par ledit autre paramètre (α), on établit le paramètre de commande de saturation (β) égal à L/(α)•(S).

7.  Dispositif de réglage de saturation de couleur selon la revendication 6, dans lequel les moyens (26) pour établir le paramètre de commande de saturation (β) sont configurés de sorte que si la valeur associée à la saturation (S) n'est pas supérieure au niveau de référence de saturation (L), le paramètre de commande de saturation (β) est établi pour être égal à un.

8.  Dispositif de réglage de saturation de couleur selon la revendication 2 ou 3, incluant des moyens pour établir un niveau de référence de saturation (L), dans lequel les moyens (26) pour établir le paramètre de commande de saturation (β) sont configurés de sorte que si la valeur associée à la saturation (S) est supérieure au niveau de référence de saturation (L) divisé par ledit autre paramètre (α), le paramètre de commande de saturation (β) est établi pour être égal à L/S sinon, le paramètre de commande de saturation (β) est établi pour être égal audit autre paramètre (α).

9.  Dispositif de réglage de saturation de couleur selon la revendication 1, incluant des moyens pour obtenir une valeur de luminance (Y) et délivrer la valeur de luminance (Y).

**10.** Dispositif de réglage de saturation de couleur selon la revendication 1, dans lequel les moyens (54, 56) pour établir le paramètre de commande de saturation (x) sont configurés de sorte que :

si ledit autre paramètre (α) n'est pas supérieur à un, le paramètre de commande de saturation (x) est établi pour être égal audit autre paramètre (α) sinon, si une valeur associée à la saturation (S) est supérieure au niveau de référence de saturation (L), le paramètre de commande de saturation (x) est établi pour être égal à un sinon, si la valeur associée à la saturation (S) n'est pas supérieure au niveau de référence de saturation (L), le paramètre de commande de saturation (x) est établi pour être égal à une valeur minimum sélectionnée parmi le groupe constitué d'une fonction (f(S)) dudit paramètre de commande de saturation (S) et d'une valeur obtenue en divisant le niveau de référence de saturation (L) par la valeur associée à la saturation (S),

dans lequel ladite fonction (f(S)) est une fonction diminuant de manière monotone sur une plage allant de zéro jusqu'au niveau de référence de saturation L, égale audit autre paramètre (α) lorsque la valeur associée à la saturation S est égale à zéro, et égale à 1 lorsque la valeur associée à la saturation (S) est supérieure au niveau de référence de saturation (L).

**11.** Dispositif de réglage de saturation de couleur selon la revendication 1, dans lequel les moyens (54, 56) établissant le paramètre de commande de saturation (x) sont configurés de sorte que :

si ledit autre paramètre (α) n'est pas supérieur à un, le paramètre de commande de saturation (x) est établi pour être égal audit autre paramètre (α) sinon, si une valeur associée à la saturation (S) est supérieure au niveau de référence de saturation (L), le paramètre de commande de saturation (x) est établi pour être égal à un.

**12.** Procédé de réglage de saturation de couleur comportant les étapes consistant à :

calculer une valeur associée à la saturation (S) depuis les composantes U et V d'un signal YUV, en utilisant

$$S = \sqrt{U^2 + V^2}, \quad S = U^2 + V^2, \quad S = |U| + |V|,$$

$$S = \max(U^2, V^2), \quad S = \max(|U|, |V|)$$

ou

$$S = U^2 + V^2 + U - V)^2$$

calculer un paramètre de commande de saturation dépendant de la saturation (β ; x) en fonction de ladite valeur associée à la saturation (S) et un niveau de référence de saturation (L), et délivrer en sortie des composantes U et V respectives d'un signal YUV de sortie et un autre paramètre (α) pour multiplier les composantes U et V, établir le paramètre de commande de saturation (x) de sorte que :

si ledit autre paramètre (α) n'est pas supérieur à un, le paramètre de commande de saturation (x) est établi pour être égal audit autre paramètre (α) sinon, le paramètre de commande de saturation (x) est établi pour être égal à une fonction (f(S)) d'une valeur associée à la saturation (S) qui est une fonction diminuant de manière monotone sur une plage allant de zéro jusqu'au niveau de référence de saturation L qui est égale audit autre paramètre (α) lorsque la valeur associée à la saturation (S) est égale à zéro et égale à 1 lorsque la valeur associée à la saturation (S) est supérieure au niveau de référence de saturation (L), où

$$f(S) = 1 + (\alpha - 1)(L - S)(L + S)/L^2,$$

multiplier les composantes U et V dudit signal YUV, ou un signal YUV dérivé de celui-ci, par ledit paramètre (β ; x)

dans lequel le paramètre est calculé de manière à limiter la saturation de couleur du signal YUV de sortie en fonction dudit niveau de référence de saturation.

13. Procédé selon la revendication 12, incluant de multiplier les composantes U et V d'un signal YUV par un autre paramètre (α).

14. Procédé selon la revendication 13, dans lequel le calcul du paramètre de commande de saturation (β) calcule ledit paramètre en fonction des valeurs Y et U suivant la multiplication par ledit autre paramètre.

15. Procédé selon la revendication 12, 13 ou 16, incluant d'établir un niveau de référence de saturation (L), et, si la valeur associée à la saturation (S) est supérieure au niveau de référence de saturation (L), d'établir le paramètre de commande de saturation (β) égal au niveau de référence de saturation (L) divisé par la valeur associée à la saturation (S).

16. Procédé selon la revendication 15, dans lequel, si la valeur associée à la saturation (S) n'est pas supérieure au niveau de référence de saturation (L), le paramètre de commande de saturation (β) est établi égal à un.

17. Procédé selon la revendication 13 ou 14, comportant les étapes consistant à établir un niveau de référence de saturation (L) et, si la valeur associée à la saturation (S) est supérieure au niveau de référence de saturation (L) divisé par ledit autre paramètre (α), à établir le paramètre de commande de saturation (β) égal à $L/(\alpha)\cdot(S)$.

18. Procédé selon la revendication 17, dans lequel si la valeur associée à la saturation (S) n'est pas supérieure au niveau de référence de saturation (L), le paramètre de commande de saturation (β) est établi pour être égal à un.

19. Procédé selon la revendication 13 ou 14, comportant les étapes consistant à établir un niveau de référence de saturation (L) et, si la valeur associée à la saturation (S) est supérieure au niveau de référence de saturation (L) divisé par ledit autre paramètre (α), à établir le paramètre de commande de saturation (β) égal à L/S sinon, à établir le paramètre de commande de saturation (β) égal audit autre paramètre (α).

20. Procédé selon la revendication 12, incluant les étapes consistant à :

   obtenir une valeur de luminance (Y), et
   délivrer la valeur de luminance (Y).

21. Procédé selon la revendication 12, comportant les étapes consistant à :

   établir le paramètre de commande de saturation (x) de sorte que :

      si ledit autre paramètre (α) n'est pas supérieur à un, le paramètre de commande de saturation (x) est établi pour être égal audit autre paramètre (α) sinon, si une valeur associée à la saturation (S) est supérieure au niveau de référence de saturation (L), le paramètre de commande de saturation (x) est établi pour être égal à un sinon, si la valeur associée à la saturation (S) n'est pas supérieure au niveau de référence de saturation (L), le paramètre de commande de saturation (x) est établi pour être égal à une valeur minimum sélectionnée parmi le groupe constitué d'une fonction (f(S)) dudit paramètre de commande de saturation (S) et d'une valeur obtenue en divisant le niveau de référence de saturation (L) par la valeur associée à la saturation (S),

   dans lequel ladite fonction (f(S)) est une fonction diminuant de manière monotone sur une plage allant de zéro jusqu'au niveau de référence de saturation L, égale audit autre paramètre (α) lorsque la valeur associée à la saturation S est égale à zéro, et égale à 1 lorsque la valeur associée à la saturation (S) est supérieure au niveau de référence de saturation (L).

22. Procédé selon la revendication 12, comportant les étapes consistant à :

   établir un niveau de référence de saturation (L),
   établir le paramètre de commande de saturation (x) de sorte que :

      si ledit autre paramètre (α) n'est pas supérieur à un, le paramètre de commande de saturation (x) est établi pour être égal audit autre paramètre (α) sinon, si une valeur associée à la saturation (S) est supérieure au niveau de référence de saturation (L), le paramètre de commande de saturation (x) est établi pour être égal à un.

# FIG. 1 (PRIOR ART)

Y ——————————→ Y

DIGITAL VIDEO
SAMPLES

U ———————⊗——————→ $U_t = \alpha \cdot U$

V ———————⊗——————→ $V_t = \alpha \cdot V$

$\alpha$

COLOR SATURATION
ADJUSTING GAIN

10

# FIG. 2

Y ——————————→ Y

DIGITAL VIDEO
SAMPLES

U ——⊗(29)—— $U_t = \alpha \cdot U$ ——⊗(27)——→ $U_o = \beta \cdot U_t$

V ——⊗(30)—— $V_t = \alpha \cdot V$ ——⊗(28)——→ $V_o = \beta \cdot V_t$

$\alpha$                                    $\beta$

COLOR SATURATION                SATURATION        20
ADJUSTING GAIN                  LIMITING PARAMETER

# FIG. 3

# FIG. 4

# FIG. 5

# FIG. 6

# FIG. 7

# FIG. 8

# FIG. 9

START

ACQUIRE U, V AND α — 100

α ≤ 1? — 112

YES → $x = \alpha$ — 113

NO

COMPUTE $S_i$ — 114

$x = f(S_i)$ — 116

$U_0 = x \cdot U$
$V_0 = x \cdot V$ — 118

MOVE TO THE NEXT SAMPLE — 120

# FIG. 10

## FIG. 11

```
                        ACQUIRE U, V AND α ─── 200

                                  │
                                  ▼
    213                      ┌──────────┐
   ┌──────┐    YES           │          │
   │ x=α  │◄─────────────────│  α ≤ 1?  │─── 212
   └──────┘                  │          │
       │                     └──────────┘
       │                           │ NO
       │                           ▼
       │                    ┌──────────────┐
       │                    │  COMPUTE Sᵢ  │─── 214
       │                    └──────────────┘
       │                           │
    222                            ▼
   ┌──────┐    YES           ┌──────────┐
   │ x=1  │◄─────────────────│  Sᵢ > L? │─── 215
   └──────┘                  └──────────┘
       │                           │ NO
       │                           ▼
       │                ┌─────────────────────┐
       │                │  x=min[f(Sᵢ), L/Sᵢ] │─── 216
       │                └─────────────────────┘
       │                           │
       └───────────────────────────┤
                                   ▼
                           ┌──────────────┐
                           │  Uo = x·U    │─── 218
                           │  Vo = x·V    │
                           └──────────────┘
                                   │
                                   ▼
                           ┌──────────────┐
                           │ MOVE TO THE  │─── 220
                           │ NEXT SAMPLE  │
                           └──────────────┘
```

Block 212: $\alpha \leq 1?$

Block 213: $x = \alpha$

Block 214: COMPUTE $S_i$

Block 215: $S_i > L?$

Block 222: $x = 1$

Block 216: $x = \min\left[f(S_i), \dfrac{L}{S_i}\right]$

Block 218: $U_0 = x \cdot U$, $V_0 = x \cdot V$

EP 1 392 063 B1

## FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4812902 A
- EP 801509 A